# EUROPÄISCHE PATENTANMELDUNG

(11) **EP 2 360 772 A1**
(43) Veröffentlichungstag der Anmeldung: **24.08.2011**
(21) Anmeldenummer: 10001458.8
(22) Anmeldetag: 12.02.2010
(51) Int. Cl.: H01M 10/0563, H01M 10/052, H01M 10/054

(54) **Wiederaufladbare elektrochemische Zelle**

(71) Anmelder: Fortu Intellectual Property AG, 6060 Sarnen (CH)
(72) Erfinder: Hambitzer, Günther, 53115 Bonn (DE); Heitbaum, Joachim, 53115 Bonn (DE); Dambach, Claus, 76327 Pfinztal (DE); Kampa, Martin, 68307 Mannheim (DE); Pszolla, Christian, 76133 Karlsruhe (DE); Ripp, Christiane, 76327 Pfinztal (DE)
(74) Vertreter: Durm & Partner

(57) **Zusammenfassung**

Die vorliegende Erfindung betrifft eine elektrochemische wiederaufladbare Batteriezelle, mit einem Gehäuse, einer positiven Elektrode, einer negativen Elektrode und einem Elektrolyten, der Schwefeldioxid und ein Leitsalz des aktiven Metalls der Zelle enthält. Die Gesamtmenge an in der Zelle enthaltenen Oxiden, die mit Schwefeldioxid unter Reduktion des Schwefeldioxids reagieren können, beträgt höchstens 10 mMol je Ah theoretische Kapazität der Zelle.

## Beschreibung

Die Erfindung betrifft eine wiederaufladbare elektrochemische Zelle mit einer positiven Elektrode, einer negativen Elektrode und einem Elektrolyten, der Schwefeldioxid (SO₂) und ein Leitsalz des aktiven Metalls der Zelle enthält.

Der zum Laden und Entladen der Zelle erforderliche Ladungstransport basiert auf der Beweglichkeit der Ionen eines Leitsalzes in dem Elektrolyt, der insbesondere flüssig oder gelförmig sein kann. In SO₂-haltigen Elektrolyten (nachfolgend "SO₂-Elektrolyten") trägt das SO₂ zu der Beweglichkeit der Ionen des Leitsalzes bei, die diesen Ladungstransport bewirken. In diesem Sinne stellt SO₂ ein Lösungsmittel für das Leitsalz dar. Der Elektrolyt kann neben dem SO₂ ein anderes Lösungsmittel enthalten, das zur Beweglichkeit der Ionen des Leitsalzes beiträgt. Dies können anorganische Lösungsmittel (beispielsweise Sulfurychlorid, Thionylchlorid), organische Lösungsmittel und ionische Flüssigkeiten (ionic liquids) sein, welche einzeln oder in Mischung eingesetzt werden können. Vorzugsweise wird bei der Erfindung eine Elektrolytlösung verwendet, die SO₂ nicht nur als Zusatz in geringer Konzentration enthält, sondern bei der die Beweglichkeit der Ionen des Leitsalzes überwiegend, besonders bevorzugt im Wesentlichen vollständig, durch das SO₂ gewährleistet wird.

Schon seit langem ist bekannt, dass SO₂-Elektrolyten wesentliche Vorteile haben (vgl. "The Handbook of Batteries" von David Linden, 1994, Mc Graw Hill). Zu diesen Vorteilen gehört eine im Vergleich zu den organischen Elektrolyten üblicher Lithium-lonen-Batteriezellen um einen Faktor 5 bis 10 höhere Leitfähigkeit. Dies ermöglicht hohe Lade- und Entladeströme und demzufolge eine hohe Leistungsdichte. Auch hinsichtlich der Kapazität der Zelle ist eine hohe Elektrolyt-Leitfähigkeit vorteilhaft, weil sie die Verwendung verhältnismäßig dicker Elektroden mit einer hohen Speicherkapazität für das aktive Metall der Zelle ermöglicht.

Unterschiedliche Typen von Zellen mit SO₂-Elektrolyt unterscheiden sich unter anderem hinsichtlich des aktiven Metalls, hinsichtlich des Leitsalzes und hinsichtlich der für die positiven und negativen Elektroden verwendeten Materialien. Insbesondere richtet sich die vorliegende Erfindung auf Batteriezellen mit folgenden Merkmalen:
a) Das aktive Metall ist vorzugsweise ein Alkalimetall, insbesondere Lithium oder Natrium. In diesem Fall ist das Leitsalz vorzugsweise ein Tetrahalogenoaluminat, insbesondere ein Tetrachloroaluminat des Alkalimetalls, beispielsweise LiAlCl₄. Das Molzahlverhältnis LiAlCl₄:SO₂ beträgt vorzugsweise mindestens 1 Mol LiAlCl₄ pro 22 Mol SO₂. Das bevorzugte maximale Molzahlverhältnis ist 1 Mol LiAlCl₄ pro 0,5 Mol SO₂. Im Rahmen der Erfindung bevorzugte aktive Metalle sind neben den Alkalimetallen auch die Erdalkalimetalle und die Metalle der zweiten Nebengruppe des Periodensystems, insbesondere Kalzium und Zink. Als Leitsalze eignen sich insbesondere deren Halogenide, Oxalate, Borate, Phosphate, Arsenate und Gallate.
b) Die positive Elektrode enthält (zum Speichern des aktiven Metalls) vorzugsweise ein Metalloxid oder ein Metallphosphat, insbesondere in Form einer Interkalationsverbindung. Das Metall des Oxids oder Phosphats ist vorzugsweise ein Übergangsmetall der Ordnungszahlen 22 bis 28, insbesondere Kobalt, Mangan, Nickel oder Eisen. Praktische Bedeutung haben insbesondere auch binäre oder ternäre Oxide oder Phosphate, die zwei oder drei unterschiedliche Übergangsmetalle in der Gitterstruktur enthalten, wie beispielsweise Lithium-Nickel-Kobalt-Oxid. Die Erfindung kann jedoch auch in Verbindung mit anderen positiven Elektroden, beispielsweise auf der Grundlage eines Metallhalogenids, wie beispielsweise CuCl₂ verwendet werden.
c) Die negative Elektrode ist vorzugsweise als Insertionselektrode ausgebildet. Dieser Begriff bezeichnet generell Elektroden, die das aktive Metall derartig in ihrem Inneren enthalten, dass es zum Austausch mit dem Elektrolyt beim Laden und Entladen der Zelle bereit ist. Von besonderer Bedeutung sind allgemein und auch für die vorliegende Erfindung negative Elektroden, die Graphit enthalten, wobei im Inneren des Graphits beim Laden der Zelle aktives Metall aufgenommen wird (Lithiumionenzellen). Beim normalen Laden der Zelle kommt es dabei nicht zu einer Abscheidung von aktivem Metall auf der Elektrodenoberfläche.
   Die Erfindung bezieht sich aber auch auf Zellen, bei denen das aktive Metall an der negativen Elektrode metallisch abgeschieden wird (Lithiummetallzellen). Besonders bevorzugt enthält dabei die negative Elektrode eine poröse Abscheideschicht, in deren Poren die aktive Masse beim Laden aufgenommen wird. Eine solche Elektrode wird ebenfalls als Insertionselektrode (im weiteren Sinne) bezeichnet. Zur Herstellung einer solchen Abscheideschicht kann beispielsweise ein Glasgewebe verwendet werden, welches vorzugsweise einen Porendurchmesser von mindestens 6 µm hat.
d) Die erforderliche elektrische Trennung der positiven und der negativen Elektrode kann entweder mittels eines Separators oder mittels eines Isolators realisiert sein.

Ein Separator ist eine Struktur, die den Durchtritt von an der negativen Elektrode abgeschiedenem metallischem Lithium zur Oberfläche der positiven Elektrode verhindert. Für Zellen mit SO₂-Elektrolyt sind insbesondere Keramikmaterialien mit einem Porendurchmesser von höchstens 1 µm und inerte Polymermaterialien, oder auch Mischungen aus beiden Materialien, geeignet. Grundsätzlich können auch Separatoren aus Polyethylen (PE), Polypropylen (PP) oder Ethylentetrafluorethylen (ETFE) verwendet werden. Um unerwünschte Reaktionen zu vermeiden, sollten für derartige Zellen vorgesehene Ladegeräte aber so ausgebildet sein, dass ein Überladen vermieden wird.

Als Isolator wird in diesem Zusammenhang eine Struktur bezeichnet, die eine elektrische Trennung von positiver und negativer Elektrode bewirkt, aber nicht so ausgebildet ist, dass der Durchtritt von metallischem Lithium zur Oberfläche der positiven Elektrode verhindert wird. In der WO 2005/031908 wird beschrieben, dass dabei auftretende lokale Kurzschlüsse nicht schädlich sein müssen, sondern sogar positive Wirkungen haben können. Der Isolator dient vorzugsweise gleichzeitig als Abscheideschicht.

Hinsichtlich näherer Informationen zu Batteriezellen mit SO₂-Elektrolyten kann beispielsweise auf folgende Dokumente verwiesen werden:
(1) US-Patent 5,213,914
(2) WO 00/79631 und US-Patent 6,730,441
(3) WO 2005/031908 und US 2007/0065714
(4) WO 2008/058685
(5) WO 2009/077140

Der Erfindung liegt die Aufgabe zugrunde, Batteriezellen mit einem SO₂-Elektrolyt zur Verfügung zu stellen, die sich durch verbesserte Eigenschaften, insbesondere hinsichtlich des langfristigen Betriebs mit einer Vielzahl von Lade- und Entladezyklen auszeichnen.

Die Aufgabe wird gelöst durch eine elektrochemische wiederaufladbare Batteriezelle mit einem Gehäuse, einer positiven Elektrode, einer negativen Elektrode und einem Elektrolyten, der Schwefeldioxid und ein Leitsalz des aktiven Metalls der Zelle enthält, die dadurch gekennzeichnet ist, dass die Gesamtmenge an in der Zelle enthaltenen Oxiden, die mit Schwefeldioxid unter Reduktion des Schwefeldioxids reagieren können, höchstens 10 mMol je Ah theoretische Kapazität der Zelle beträgt.

Im Rahmen der Erfindung wurde festgestellt, dass bestimmte oxidische Verunreinigungen die langfristige Funktion von Batteriezellen mit einem SO₂-haltigen Elektrolyt wesentlich beeinträchtigen können. Das sind Oxide, die mit Schwefeldioxid unter Reduktion des Schwefeldioxids reagieren können, das heißt unter Bedingungen, die im praktischen Betrieb der Batteriezelle vorkommen können, zu einer solchen Reaktion fähig sind. Solche Oxide werden nachfolgend als "Störoxide" bezeichnet. Die in Rede stehenden Reaktionen sind kinetisch oft stark gehemmt, so dass sie nur über sehr lange Zeit ablaufen. Dennoch stören sie die Batteriefunktion unter Berücksichtigung der Tatsache, dass Batterien über lange Zeit (mehrere Jahre) funktionsfähig bleiben müssen.

Diese Beobachtung gilt sowohl für Lithiumionenzellen als auch für Lithiummetallzellen. Im Rahmen der Erfindung wurde festgestellt, dass das Auftreten von metallischem Lithium die Reaktionen der Störoxide nicht verändert. Dies trifft unabhängig davon zu, ob lokale Kurzschlüsse entstehen (Isolator) oder ob eine Trennung des aktiven Metalls von der positiven Elektrode gewährleistet ist (Separator). In beiden Fällen verringert auch geringe Menge von Störoxiden die Kapazität der Zelle sehr stark.

Besonders überraschend ist, dass schon sehr kleine Konzentrationen an Störoxiden die langfristige Funktion der Zelle massiv stören können. Beispielsweise hat eine im Rahmen der Erfindung erprobte Zelle im SubC-Format eine theoretische Entladekapazität von 2,3 Ah. Die Funktion einer solchen Zelle kann schon durch die Gegenwart von etwa 5 bis 10 mMol Störoxid so beeinträchtigt werden, dass ihre Kapazität im Laufe der langfristigen Benutzung über viele Lade- und Entladezyklen bis auf Null absinkt.

Die theoretische Kapazität der Zelle wird durch deren Elektroden bestimmt, wobei im Rahmen der Erfindung als theoretische Kapazität der Zelle die theoretische Kapazität der positiven Elektrode verstanden wird. Dies ist die maximale theoretisch in der Elektrode gespeicherte Ladungsmenge des aktiven Metalls, d.h. die elektrische Ladungsmenge, die der maximalen Menge des aktiven Metalls entspricht, die die positive Elektrode auf Basis stöchiometrischer Überlegungen rechnerisch enthält. Dieser Wert ist stets höher als die tatsächlich erreichbare maximale Kapazität der Elektrode (und damit der Zelle), weil die theoretisch speicherbare Ladungsmenge in der Praxis nie vollständig aus dieser entnommen werden kann.

Wenn der Gehalt an Störoxiden in der Zelle unterhalb der im Rahmen der Erfindung ermittelten Grenzwerte liegt, wird dadurch deren Langzeitfunktion wesentlich verbessert. Insbesondere bleibt die elektrische Kapazität über viele Lade- und Entladezyklen im Wesentlichen stabil, wobei auch eine wesentliche Verbesserung der Überladefestigkeit erreicht wird, d. h. die Funktion der Zelle wird auch durch Überladen nicht zerstört.

Wie einleitend dargelegt, bezieht sich die Erfindung vorzugsweise auf Zellen mit einem Elektrolyt, dessen SO₂-Gehalt so hoch ist, dass die Beweglichkeit der Leitsalz-lonen überwiegend oder sogar im Wesentlichen vollständig auf der Gegenwart des SO₂ basiert. Die Mindestmenge an SO₂ je Ah theoretische Kapazität der Zelle ist vorzugsweise 1 mMol, wobei, jeweils bezogen auf die theoretische Kapazität der Zelle, eine Mindestmenge von 5 mMol besonders bevorzugt und eine Mindestmenge von 10 mMol noch weiter bevorzugt ist.

In Kenntnis der Erfindung lässt sich deren Wirkung durch eine Vielzahl von Reaktionen erklären, an denen in der Regel mehrere Elemente der Zelle (Elektroden, Elektrolyt) beteiligt sind. Dies wird nachfolgend anhand einer elektrochemischen Zelle mit einer negativen Elektrode auf Basis von Kohlenstoff und einer positiven Elektrode auf Basis eines Metalloxids erläutert.

### a) Reaktionen von Störoxiden beim Laden und Entladen

Beim normalen Laden und Entladen der Zelle (ohne Überladen) führen nach dem gegenwärtigen Kenntnisstand der Erfinder die nachfolgend erläuterten Reaktionen von Störoxiden zu einer Reduktion des Schwefeldioxids und letztlich zu Kapazitätsverlusten.

### a1) Direkte Reaktion durch Störoxide an dem aktiven Material der negativen Elektrode

Eine typische oxidische Verunreinigung am aktiven Material einer negativen Kohlenstoffelektrode ist C₆0. Es reagiert mit dem LiC₆ der Elektrode und dem SO₂ des Elektrolyten unter Verbrauch von sechs Elektronen (e⁻) gemäß folgender Reaktionsgleichung:

6 LiC₆ + C₆O + 2 S^{(+IV)}O₂ → 7 C₆ + Li₂S^{(+II)}₂O₃ + 2 Li₂O; Ladungsverbrauch 6 e (1)

Die Reaktionsprodukte sind Kohlenstoff (C₆), Lithiumthiosulfat (Li₂S₂O₃) und Lithiumoxid (Li₂O).

Durch die in Klammern hochgestellte römische Ziffer wird die Oxidationszahl des Schwefels in der jeweiligen Verbindung bezeichnet. Bei der Reaktion sinkt die Oxidationszahl des Schwefels um 2. Das Schwefeldioxid wird also bei der Bildung des Lithiumthiosulfats reduziert.

### a2) Indirekte Reaktion durch Störoxid an dem aktiven Material der negativen Elektrode

Die Gegenwart des Störoxids C₆O führt indirekt zu folgender weiterer Reaktionsfolge, die mit einer Reduktion des Schwefeldioxids, letztlich unter Bildung von Lithiumthiosulfat einhergeht:

2 Li₂O + 2 AlCl₃ → 2 AIOCI + 4 LiCl (2)

4 Li₂S^{(+III)}₂O₄ + 2 AIOCI + 2 AlCl₃ + 8 LiC₆ + → 4 Li₂S^{(+II)}₂O₃ + 2 Al₂O₃ + 8 LiCl + 8C₆; Ladungsverbrauch 8 e⁻ (3a)

Gemäß (2) reagiert das aus Reaktionsgleichung (1) resultierende Lithiumoxid mit der Lewis-Säure Aluminiumchlorid (AlCl₃), die durch Autodissozation des Leitsalzes in der Regel in dem Elektrolyt enthalten ist, zu Aluminiumoxichlorid (AIOCI) und Lithiumchlorid (LiCl). Aber auch die neutrale Form des Leitsalzes (LiAlCl₄) kann zur Lösung des Li₂O und weiteren Reaktion mit Li₂S₂O₄ führen:

2 Li₂O + 2 LiAlCl₄ → 2 LiAlOCl₂ + 4 LiCl (2')

4 Li₂S^{(+III)}₂O₄ + 2 LiAlOCl₂ + 2 LiAlCl₄ + 8 LiC₆ → 4 LbS^{(+II)}₂O₃ + 2 Al₂O₃ +12 LiCl + 8C₆; Ladungsverbrauch 8 e (3a')

Bei der weiteren Reaktion (3a) ist zu berücksichtigen, dass in derartigen Zellen eine (in der Regel für die Funktion der Zelle vorteilhaften und deshalb erwünschte) Deckschicht aus Lithiumdithionit vorhanden ist, die gemäß

8 LiC₆ + 8 SO₂ → 8 C₆ + 4 Li₂S₂O₄; Ladungsverbrauch 8 e⁻ (4a)

unter Verbrauch von acht Elektronen aus dem LiC₆ der Elektrode und dem SO₂ des Elektrolyten gebildet wird und aus Lithiumdithionit (Li₂S₂O₄) besteht. Diese Verbindung der Deckschicht reagiert gemäß (3a) weiter, wobei wiederum das SO₂ des Lithiumdithionit unter Bildung von Lithiumthiosulfat reduziert wird (die Oxidationszahl des Schwefels wird von +III auf +II vermindert).

Insgesamt führt die Gegenwart von einem Molekül C₆O zu einem Verbrauch von 10 Molekülen SO₂ und 22 e- (wobei 5 Moleküle Li₂S₂O₃ gebildet werden). Umgerechnet bedeutet dies, dass je mMol C₆O 594 mAh Ladung irreversibel verbraucht werden.

Bei den vorstehenden Überlegungen ist zusätzlich die Löslichkeit der aus der Reaktion (1) resultierenden Reaktionsprodukte Lithiumthiosulfat (Li₂S₂O₃) und Lithiumoxid (Li₂O) zu berücksichtigen. Wenn sich das Li₂O nicht löst, kann die Reaktion (2) nicht stattfinden und damit finden auch die Folgereaktionen (3a) und (4a) nicht statt. Der Ladungsverbrauch wird folglich auf 6e⁻ aus der Reaktion (1) reduziert. Umgerechnet werden dabei je mMol C₆O 162 mAh Ladung irreversibel verbraucht.

Wenn sich das Li₂O löst, nicht jedoch das Li₂S₂O₃, so findet die Reaktion (4a) nicht statt. In diesem Fall ist der Ladungsverbrauch auf 14e- reduziert. Dies bedeutet, dass je mMol C₆O 378 mAh Ladung irreversibel verbraucht werden.

Je nach der Löslichkeit der genannten Komponenten (welche unter anderem von der Temperatur und der SO₂-Konzentration abhängt) liegt der Kapazitätsverlust, der durch Störoxide an dem aktiven Material der negativen Elektrode verursacht wird, also zwischen 162 und 564 mAh.

### a3) Reaktionen durch Störoxide an dem aktiven Material der positiven Elektrode

Eine typische oxidische Verunreinigung am aktiven Material der positiven Elektrode ist ein Hydroxid, das sich an deren Oberfläche bildet, im Falle einer Lithiummetalloxid-Elektrode der allgemeinen Formel LiMeO₂, beispielsweise LiMeO(OH)₂. Es reagiert mit in dem Elektrolyt anwesendem AlCl₃ gemäß folgender Reaktionsgleichung zu Aluminiumoxichlorid, einem Chlorid des Metalls Me, HCl und LiCl:

LiMeO(OH)₂ + 3 AlCl₃ → 3 AIOCI + MeCl₃ + 2 HCl + LiCl (5)

Das Hydroxid kann auch mit der neutralen Form des Leitsalzes reagieren gemäß:

LiMeO(OH)₂ + 3 LiAlCl₄ → 3 LiAlOCl₂ + MeCl₃ + 2 HCl + LiCl (5')

Das dabei gebildete Aluminiumoxichlorid reagiert mit der Lithiumdithionit-Deckschicht gemäß den nachfolgenden Gleichungen (3b) und (4b) weiter, wobei sich diese nur hinsichtlich der Mol-Zahlen von der Gleichung (3a) und (4a) unterscheiden und deswegen nicht nochmals erläutert werden müssen:

6 Li₂S^{(+III)}₂O₄ + 3 AIOCI + 3 AlCl₃ + 12 LiC₆ → 6 Li₂S^{(+III)}₂O₃ + 3 Al₂O₃ + 12 LiCl + 12 C₆; Ladungsverbrauch 12 e- (3b)

Selbstverständlich ist auch hier der Reaktionsweg über das Lithiumaluminiumoxichlorid (LiAlOCl₂) analog (3a') möglich.

12 LiC₆ + 12 SO₂ → 12 C₆ + 6 Li₂S₂O₄; Ladungsverbrauch 12e- (4b)

Insgesamt führt die Gegenwart von einem Molekül LiMeO(OH)₂ zum Verbrauch von 12 Molekülen SO₂ und 24 e⁻,wobei (mit 3 Molekülen AIOCI als Zwischenprodukt) 6 Moleküle Li₂S₂O₃ und 2 Moleküle HCl gebildet werden. Der Ladungsverbrauch entspricht, bezogen auf 1 mMol LiMeO(OH)₂ einer Ladungsmenge von 702 mAh. Zusätzlich steht das Lithium aus einem Molekül LiMeO(OH)₂ nicht mehr als aktives Metall zur Verfügung. Daraus resultiert ein weiterer Kapazitätsverlust von 27 mAh pro mMol LiMeO(OH)₂. Insgesamt geht somit je mMol LiMeO(OH)₂ eine Kapazität von 729 mAh verloren, wenn die Reaktionen vollständig ablaufen.

Wie oben erwähnt, finden die Reaktionen (3b) und (4b) nur statt, wenn sich das gemäß (3b) gebildete Lithiumthiosulfat löst und infolgedessen die Neubildung von Lithiumdithionid gemäß (4b) stattfindet. Wenn dies nicht der Fall ist, verringert sich der Ladungsverbrauch auf 12e⁻. Dies entspricht je mMol LiMeO(OH)₂ einer Kapazität von 351 mAh, die irreversibel verloren geht. Hinzu kommt auch hier der Kapazitätsverlust durch verbrauchtes aktives Metall in Höhe von 27 mAh. Der gesamte Kapazitätsverlust beträgt in diesem Fall also 378 mAh.

### a4) Reaktionen durch Störoxide in der Elektrolytlösung

Weitere oxidische Verunreinigungen entstehen bei der Herstellung der Elektrolytlösung oder durch Reaktion der Elektrolytlösung mit sonstigen Komponenten der Zelle (beispielsweise Gehäuse, Separator, Stromableiter von und zu den Elektroden). Sie liegen typischerweise ebenfalls als saure (AIOCI) oder neutrale (LiAlOCl₂) Aluminiumoxichloride vor und führen zu folgenden Reaktionen, wobei die Reaktionsgleichungen (3c) und (4c) bis auf die Mol-Zahlen wiederum (3a) und (4a) entsprechen.

2 Li₂S^{(+III)}₂O₄ + AIOCI + AlCl₃ + 4 LiC₆ → 2 Li₂S^{(+III)}₂O₃ + 2 Al₂O₃ + 4 LiCl + 4 C₆; Ladungsverbrauch 4 e- (3c)

Auch in diesem Fall ist der alternative Reaktionsweg analog (3a') möglich.

4 LiC₆ + 4 SO₂ → 4 C₆ + 2 Li₂S₂O₄; Ladungsverbrauch 4 e (4c)

Die Gegenwart von einem Molekül AIOCI führt zum Verbrauch von 4 Molekülen SO₂ und 8 e⁻, wobei 2 Moleküle Li₂S₂O₃ erzeugt werden. Der entsprechende Ladungsbrauch je mMol AlOCl ist 216 mAh.

Wenn sich das Lithiumthiosulfat nicht löst, verringert sich auch in diesem Fall der Ladungsverbrauch entsprechend, also auf 4e-. Dies entspricht 108 mAh.

Für die Stromableiter von und zu den Elektroden wird häufig Nickel oder eine Nickellegierung verwendet, wobei die Oberfläche dieser Bauteile oxidiert sein kann, also Nickeloxid enthält. Ist das Nickelchlorid (noch) nicht in der Elektrolytlösung gelöst, kann beim Laden der Zelle eine direkte Reaktion analog Reaktionsgleichung (1) unter Bildung von Li₂S₂O₃ stattfinden.

### b) Durch Störoxide verursachte Folgereaktionen beim Überladen

Beim Überladen der Zelle steigt die Ladespannung an. Ab einer bestimmten, von dem Zelltyp abhängigen Spannung führt der Anstieg der Ladespannung zur Zersetzung der Elektrolytlösung. Wenn diese als Leitsalz beispielsweise ein Tetrachloroaluminat enthält, wird Chlor (Cl₂) als Überladeprodukt an der positiven Elektrode gebildet. Dies führt zu weiteren Reaktionen, bei denen das gemäß den zuvor beschriebenen Reaktionen gebildete Lithiumthiosulfat mit zu der negativen Elektrode difundiertem Chlor und dem LiC₆ der negativen Elektrode über mehrere Reaktionsstufen weiter reagiert. Dabei wird der Schwefel disproportioniert bis er in einem Endprodukt die Oxidationszahl -II und im anderen Endprodukt die Oxidationszahl +VI erreicht hat. Beispiele solcher Endprodukte mit Oxidationszahl -II sind Metallsulfide (z. B. Li₂S^{(-II)} oder Al₂S^{(-II)}3) Ein Beispiel für ein Endprodukt mit der Oxidationszahl +VI ist Lithiumchlorsulfonat (LiSO₃Cl).

Die Summengleichung der mehrstufigen Reaktion lässt sich wie folgt angeben:

6 LiC₆ + Li₂S₂O₃ + 3 Cl₂ → 6 C₆ + LiS^{(+VI)}O₃Cl + Li₂S^{(-II)} + 5 LiCl (6)

Für die Reduktion von einem Molekül Li₂S^{(+II)}₂O₃ zu Schwefelverbindungen laut Gleichung (6) werden 6 e⁻ benötigt. Umgerechnet bedeutet dies, dass für die Reaktion von einem mMol Lithiumthiosulfat 162 mAh an Kapazität irreversibel verbraucht werden.

Zusammenfassend ergibt sich aus den vorstehenden Erläuterungen, dass die Gegenwart von Störoxiden beim normalen Laden und Entladen der Zelle (ohne Überladen) zur Bildung einer Schwefel-Sauerstoff-Verbindung führt, bei der der Schwefel eine Oxidationsstufe von maximal +III besitzt. Ein wichtiges Beispiel ist ein Thiosulfat des aktiven Metalls (im Fall einer Lithiumzelle zur Bildung von Lithiumthiosulfat). Bei der Reaktionsfolge wird Schwefeldioxid des Elektrolyts reduziert. Wird die Zelle unter Bildung von Überladeprodukten überladen, führt dies zu weiteren Reaktionen, bei denen der Schwefel des Thiosulfats zu Schwefelverbindungen mit den Oxidationszahlen -11 und +VI disproportioniert wird. Ein charakteristisches Reaktionsprodukt, das beim Überladen in Gegenwart von Störoxiden gebildet wird, ist ein Chlorsulfonat des aktiven Metalls, in einer Lithiumzelle Lithiumchlorsulfonat. Die elektrische Ladungsmenge, die für diese Reaktionen gebraucht wird, wird von der Zelle geliefert und steht nicht mehr als nutzbare Batteriekapazität zur Verfügung.

Die vorstehend genannten Störoxide sind Beispiele für jegliche Art von Störoxiden (im Sinne der weiter oben gegebenen Definition), die sich auf bzw. in den Materialien der Zelle befinden.

Die positive Elektrode kann beispielsweise Störoxide in Form von verschiedenen Oxiden bzw. oxidhaltigen Verbindungen enthalten, die sich auf der Oberfläche des Elektrodenmaterials befinde Hierzu gehören auch Hydroxide (einschließlich Wasser), Oxiddihydroxide, Carbonate, Borate etc.

In ähnlicher Weise stellt die Formulierung C₆O eine vereinfachte Darstellung eines an einer negativen Kohlenstoffelektrode gebundenen Sauerstoffs dar. Auf der Graphitoberfläche befindet sich Sauerstoff in kovalent gebundener Form, beispielsweise als Ketone, Aldehyde, Carbonyle, Alkohole, Epoxide, Karbonsäuren etc. Der Sauerstoff kann auch in Form von adsorbiertem Wasser oder adsorbiertem Metallhydroxid oder ähnlichem vorliegen.

Allen Störoxiden gemeinsam ist nach den Feststellungen der Erfinder jedoch, dass sie mit in dem Elektrolyt enthaltendem Schwefeldioxid unter Reduktion des Schwefeldioxids reagieren können. Typischerweise wird beim Normalbetrieb der Zelle (ohne Überladen) eine Schwefel-Sauerstoff-Verbindung gebildet, bei der der Schwefel eine Oxidationsstufe von maximal 3 besitzt, z.B. ein Thiosulfat des aktiven Metalls. Beim Betrieb mit Überladen entsteht typischerweise eine Schwefel-Sauerstoff-Verbindung, die zusätzlich ein Halogen enthält und bei der die Oxidationsstufe des Schwefels +VI ist. Zum Beispiel wird ein Chlorsulfonat des aktiven Metalls der Zelle gebildet.

Folgende Tabelle fasst den erläuterten Zusammenhang zwischen der Konzentration von Störoxiden (StO) an der negativen Elektrode (NE), der positiven Elektrode (PE) und im Elektrolyt zusammen:

**Tabelle 1:**

| | Laden und Entladen | | | Überladen | Gesamt |
|---|---|---|---|---|---|
| Ort | SO₂-Verbrauch | Li₂S₂O₃-Bildung | Kap.verlust mAh/mMol StO | Kap.verlust mAh/mMol StO | Kap.verlust mAh/mMol StO |
| NE | 2 - 10 mMol | 1 - 5 mMol | 162 - 594 | 810 | 1404 |
| PE | 0 - 12 mMol | 6 mMol | 378 - 729 | 972 | 1701 |
| Elektrolyt | 0 - 4 mMol | 2 mMol | 108 - 216 | 324 | 540 |

Da der Kapazitätsverlust beim Laden und Entladen (wie erläutert) von der Löslichkeit der Komponenten in dem Elektrolyt abhängt, wurden in der Tabelle die entsprechenden Bereiche angegeben. Entsprechendes gilt für den SO₂-Verbrauch, der ebenfalls von der Löslichkeit der Reaktionskomponenten abhängt. Je nach Ausgangskonzentration des SO₂ kann auch durch den SO₂-Verbrauch die Funktionsfähigkeit der Zelle beeinträchtigt oder zerstört werden, weil der Ladungstransport in dem Elektrolyten von der SO₂-Konzentration abhängt.

Beim Überladen laufen nach den Feststellungen der Erfinder auch die zuvor mangels Löslichkeit gehemmten Reaktionen ab. Deshalb ist für den Kapazitätsverlust beim Überladen jeweils nur ein Wert angegeben.

Wie sich aus der Tabelle ergibt, verursachen Störoxide, die in dem Elektrolyt enthalten sind, den relativ geringsten Kapazitätsverlust je mMol. Aus dem weiteren Zahlenwert von ca. 100 mAh/mMol ergibt sich, dass bei vollständiger Reaktion des in dem Elektrolyt enthaltenen Störoxids ohne die erläuterten Überladereaktionen) die Kapazität der Zelle auf Null absinkt, wenn der Elektrolyt mehr als etwa 10 mMol Störoxid je Ah theoretische Kapazität der Zelle enthält und keine weiteren Störoxide in der Zelle vorhanden sind.

In der Praxis ist aber zu berücksichtigen, dass je nach Einsatzgebiet der Batterie Betriebsbedingungen herrschen können, bei denen die Störoxide nur partiell reagieren. Dies gilt beispielsweise für Batterien, die für Niedertemperatureinsätze gedacht sind oder für Batteriesysteme, bei denen durch entsprechende Konstruktion der Ladegeräte ein Überladen der Batteriezelle zuverlässig verhindert wird. In diesen Fällen können höhere Konzentrationen an Störoxiden tolerierbar sein.

Umgekehrt sollten bei hohen Anforderungen an die Langzeitstabilität der Zelle und diesbezüglich ungünstigen Betriebsbedingungen (z.B. Hochtemperaturanwendungen) geringere Gesamtmengen an Störoxiden in der Zelle enthalten sein. Gemäß bevorzugten Ausführungen enthält sie deswegen höchstens 5 mMol, vorzugsweise höchstens 2 mMol, besonders bevorzugt höchstens 1 mMol, noch weiter bevorzugt höchstens 0,5 mMol und ganz besonders bevorzugt höchstens 0,1 mMol Störoxide je Ah theoretische Kapazität der Zelle.

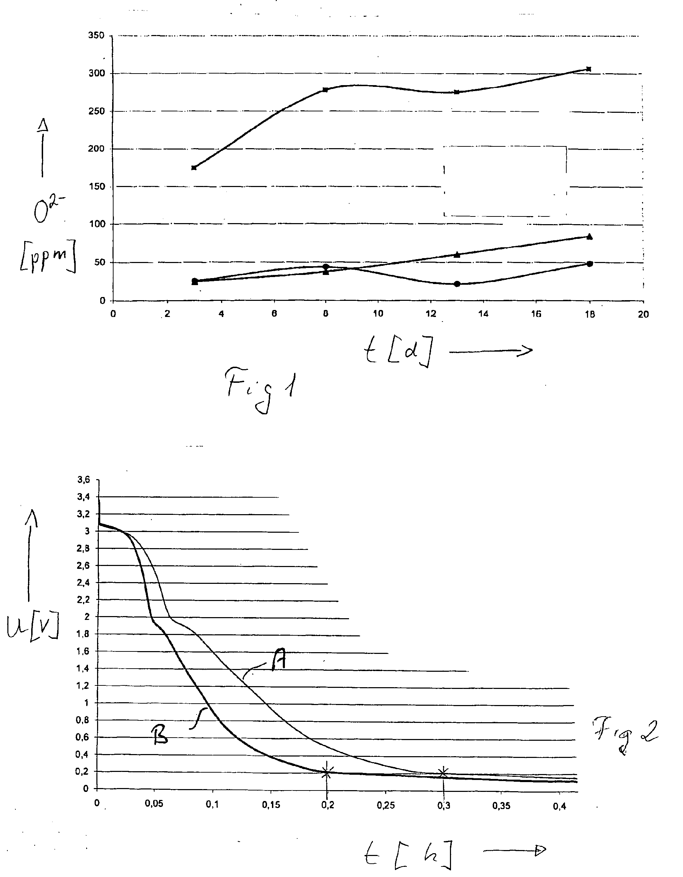

Im Rahmen der Erfindung wurden Experimente durchgeführt, bei denen typische Materialien der negativen und positiven Elektrode, nämlich Graphit und ein Trimetalloxid [Li(Ni_{0,77}Co_{0,13}Mn_{0,1})O₂] bei 60°C über achtzehn Tage in einer Elektrolytlösung der Zusammensetzung LiAlCl₄ × 1,5 SO₂ gelagert wurden. Während dieser Lagerzeit wurde mehrfach der Karl-Fischer-Wert bestimmt, der ein Maß für in dem Elektrolyt enthaltene Störoxide ist. Die Ergebnisse sind in Figur 1 dargestellt. Sie zeigt die nach Karl Fischer bestimmte O²-Konzentration in ppm gegenüber der Zeit in Tagen für drei Versuche, nämlich mit dem reinen Elektrolyt (runde Punkte), dem Elektrolyt mit Trimetalloxid (Rechtecke) und dem Elektrolyt mit Graphit (Dreiecke).

Daraus lassen sich folgende Feststellungen ableiten:
- Der Elektrolyt enthält sehr geringe Mengen an O²⁻, wobei die Schwankung des Kurvenverlaufs innerhalb der Fehlergrenze liegt.
- Bei dem Experiment mit Trimetalloxid ist erst ein Anstieg, dann ein Plateau und danach ein weiterer Anstieg zu erkennen. Dies deutet auf mindestens zwei Störoxide hin, die sich mit unterschiedlicher Geschwindigkeit lösen.
- Bei dem Experiment mit Graphit ist der Anstieg des O²⁻ sehr gering, jedenfalls geringer als bei dem Trimetalloxid. Nach dem Kenntnisstand der Erfinder ist dies darauf zurückzuführen, dass von den auf dem Graphit vorhandenen Störoxiden nur ein kleiner Teil sich ohne weiteres in der Elektrolytlösung löst. Dies sind nach dem Kenntnisstand der Erfinder Störoxide, die nicht kovalent gebunden sind. Dies bedeutet jedoch nicht, dass auf dem Graphit keine größeren Mengen an Störoxiden vorhanden sind. Vielmehr wurde im Rahmen weiterer experimenteller Untersuchungen festgestellt, dass auf normalem Graphit relativ große Mengen Störoxide vorhanden sind, die jedoch kovalent gebunden sind und deswegen erst beim Laden der Zelle reagieren.

Die Ergebnisse eines solches Experimentes sind in Figur 2 dargestellt. Sie bezieht sich auf elektrochemische Messungen, die an einer E-Zelle in drei Elektrodenanordnungen durchgeführt wurden. Dargestellt ist die elektrische Spannung U in Volt in Abhängigkeit von der Zeit t in Stunden beim ersten Laden von zwei verschiedenen negativen Graphit-Elektroden. Für die erste Elektrode wurde kommerzielles Graphit ohne zusätzliche Behandlung verwendet. Die zweite Elektrode wurde zur Entfernung der Störoxide für 90 Stunden bei 1000°C in einem Ofen unter Argon-Schutzgas behandelt.

Die Zelle wurde mit beiden Elektroden bei einem konstanten Strom von 11 mA geladen. Das daraus resultierende Spannungs-Zeit-Diagramm ist für die unbehandelte Elektrode mit A und für die vorbehandelte Elektrode mit B bezeichnet.

Beim ersten Laden einer negativen Elektrode bilden sich Deckschichten auf dem Graphit, nämlich eine Deckschicht aus Lithiumdithionit, die für die Funktion der Zelle vorteilhaft ist und eine unerwünschte Deckschicht aus Lithiumthiosulfat, deren Bildung auf die Gegenwart von Störoxiden zurückzuführen ist. Aus anderen Experimenten ist bekannt, dass die Deckschichtbildung bei einer Spannung von 0,2 Volt abgeschlossen ist. Figur 2 zeigt, dass dieser Spannungswert für die behandelte Elektrode nach 0,2 Stunden und für die unbehandelte Elektrode nach 0,3 Stunden erreicht ist. Da der Stromfluss konstant 11 mA betrug, errechnet sich eine verbrauchte Ladungsmenge von 2,2 mAh für die vorbehandelte, im wesentlichen störoxidfreie Elektrode und 3,3 mAh für die unbehandelte Elektrode. Dies zeigt, dass normales Graphit relativ große Mengen Störoxide enthält, die erst beim Laden der Zelle reagieren.

Weitere Experimente wurden mit verschiedenen Materialien durchgeführt, die für positive Elektroden geeignet sind. Dabei wurden die in der nachfolgenden Tabelle genannten Materialien jeweils in kommerziell erhältlicher Form in Elektrolytlösung bei 60°C 21 Tage gelagert. Die Zunahme des Störoxidgehalts des Elektrolyten wurde nach Karl Fischer bestimmt. Sie entspricht der Abgabe der Störoxide des Elektrodenmaterials. Die Ergebnisse sind in der nachfolgenden Tabelle 2 dargestellt.

**Tabelle 2:**

| Material | Formel | Störoxid-Gehalt |
|---|---|---|
| Lithiumkobaltoxid | LiCoO₂ | 33.000 ppm |
| Lithiumeisenphosphat | LiFePO₄ | 1.600 ppm |
| Trimetalloxid Charge 1 | Li/Ni₀,₇₇C0₀,₁₃Mn₀,₁)O₂ | 2.800 ppm |
| Trimetalloxid Charge 2 | Li/Ni_{0,77}C0₀,₁₃Mn_{0,1})O₂ | 4.500 ppm |

Extrem hoch ist der Störoxidgehalt von Lithiumkobaltoxid. Obwohl die Werte der anderen Elektrodenmaterialien etwa einen Größenordnung niedriger sind, sind auch diese Werte noch so hoch, dass bei unveränderter Verwendung dieser Materialien die Funktionsfähigkeit der Zelle stark beeinträchtigt wird.

Ähnliche Experimente wurden auch mit anderen in erfindungsgemäßen Zellen verwendeten Materialien durchgeführt. Beispielsweise wurde der Störoxidgehalt von Nickelschaum (gebräuchlich als Ableiter der Elektroden), jeweils in kommerziell erhältlichem Zustand, und Glasgewebe (gebräuchlich als Isolator zwischen den Elektroden) bestimmt. Die Materialien wurden in Elektrolytlösung sieben Tage bei 60°C gelagert. Die daraus resultierende Zunahme des Störoxidgehaltes des Elektrolyten wurde mit Hilfe der Karl-Fischer-Methode bestimmt. Daraus resultierten folgende Störoxidgehalte:

**Tabelle 3:**

| Material | Störoxid-Gehalt |
|---|---|
| Nickelschaum | 19,2 ppm |
| Glasgewebe | 33,8 ppm |

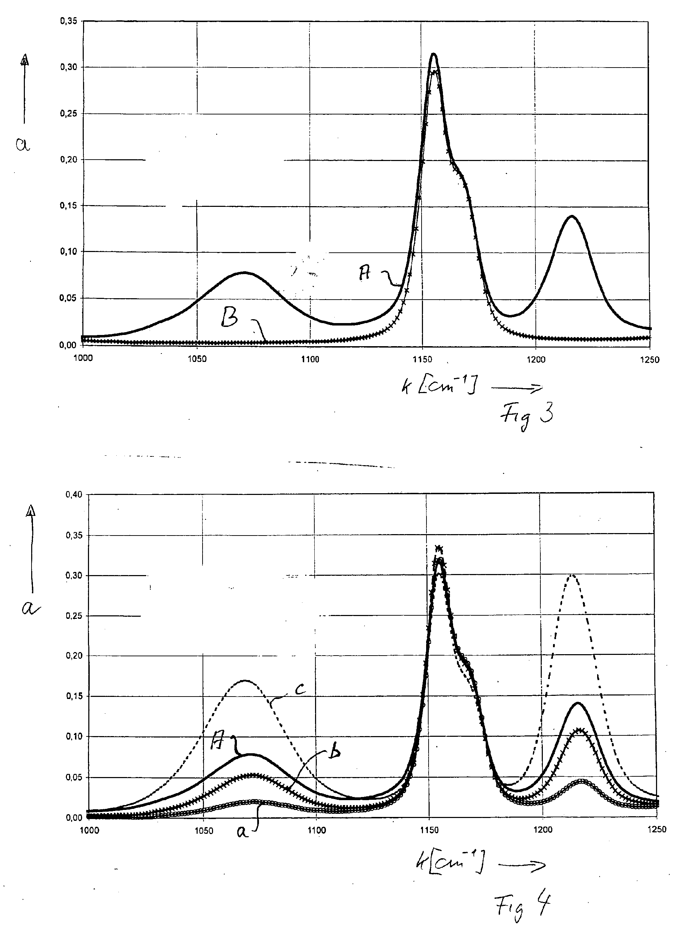

Neben der Karl-Fischer-Methode können selbstverständlich auch andere chemisch-analytische Nachweisverfahren verwendet werden, um Störoxide oder aus der Reaktion der Störoxide in der Zelle resultierende Reaktionsprodukte zu bestimmen. Beispielsweise zeigt Figur 3 Messergebnisse, die mittels der FTIR-Spektroskopie (Fourier Transformation Infrarot Spektroskopie) gemessen wurden. Dargestellt ist das FTIR-Spektrum eines Elektrolyten der Zusammensetzung LiAlCl₄ x 1,5 SO₂, der aus einer Zelle nach ca. 550 Lade- und Entladezyklen entnommen wurde (durchgezogene Linie A) im Vergleich zu dem gleichen SO₂-Elektrolyten, der jedoch noch nicht gezykelt wurde (dünne Linie B mit Kreuzen). Dabei ist die Absorbanz a in willkürlichen Einheiten aufgetragen über die Wellenzahl k in cm⁻¹. Das Spektrum zeigt typische Maxima des Chlorsulfonats bei ca. 1218 cm⁻¹ und bei ca. 1070 cm⁰¹. Das große Maximum bei ca. 1160 cm⁻¹ ist dem Schwefeldioxid der Elektrolytlösung zuzuordnen. Die Bildung des Chlorsulfonats während des Zykelns ist deutlich zu erkennen.

Durch entsprechende Kalibration ist eine quantitative Bestimmung des charakteristischen Reaktionsproduktes möglich. Figur 4 zeigt eine Darstellung entsprechend Figur 3 für den SO₂-Elektrolyt einer gezykelten Zelle (Kurve A wie bei Figur 3) und für drei Kalibrationslösungen, welche ein Gew% Chlorsulfonat (Kurve a), 3 % Chlorsulfonat (Kurve b) und 10 Gew% Chlorsulfonat (Kurve c) enthielten.

### Herstellung von Störoxid-freien bzw. -reduzierten Ausaanasmaterialien

In Kenntnis der Erfindung sind dem Fachmann auf der Grundlage der nachfolgenden Erläuterungen verschiedene Möglichkeiten zugänglich, den Störoxidgehalt der Komponenten der Zelle zu reduzieren.

### a) Positive Elektrode

Der Gehalt an Störoxiden auf dem Material der positiven Elektrode kann durch Tempern bei höheren Temperaturen reduziert werden, wobei sowohl die gesamte Elektrode (aktives Material und Stromableiter) als auch nur das aktive Material isoliert der Temperaturbehandlung unterworfen werden kann. Grundsätzlich ist eine hohe Temperatur vorteilhaft, jedoch darf sie nicht so hoch sein, dass (insbesondere durch Reaktionen eines in dem Elektrodenmaterial verwendeten Bindemittels) neue Störoxide entstehen. Im Rahmen der Erfindung wurde festgestellt, dass bei zu hohen Temperaturen durch Reduktion des Bindemittels gebildeter Kohlenstoff das Lithiummetalloxid zu Metalloxid unter Bildung von Lithiumoxid und Kohlendioxid reduziert:

4 LiMeO₂ + C↔ 2 Li₂O + 4 MeO + CO₂

In Kenntnis der Erfindung ist es ohne weiteres möglich, das Bindemittel und die Temperatur so aufeinander abzustimmen, dass der Störoxidgehalt auf unkritische Werte reduziert wird.

### b) Negative Elektrode

Auch die negative Elektrode kann durch eine Temperaturbehandlung so weitgehend von Störoxiden befreit werden, dass der Gehalt unterhalb der kritischen Grenze liegt. Dazu wird das Ausgangsmaterial Graphit oder die gesamte Elektrode einschließlich Stromableiter auf mehr als 1000°C unter Inertgasatmosphäre erhitzt.

Das resultierende praktisch oxidfreie Material hat im Vergleich zu normalem Graphit eine völlig andere Konsistenz. Es fließt wie eine Flüssigkeit. Deshalb ist bei der Herstellung der negativen Elektrode aus oxidfreiem Graphit eine besondere Verfahrensweise erforderlich. Um eine Bindung der oxidfreien Graphitpartikel zu erreichen, kann beispielsweise ein anderes Kohlenstoff-Material (z.B. Graphit, das bei 500°C getempert wurde, in einer Konzentration von 15%) zugemischt werden. Schon eine solche Beimischung reicht aus, um das Fließverhalten des weitgehend oxidfreien Graphits soweit zu modifizieren, dass die Herstellung einer Elektrode möglich ist.

### c) Elektrolytlösung

Eine Möglichkeit, den Gehalt an Störoxiden in einer SO₂-Elektrolytlösung zu senken, ist die Trocknung der Ausgangssubstanz Lithiumchlorid (LiCl). Zu diesem Zweck wird das Salz beispielsweise in einer Argonatmosphäre für 12 Stunden auf 450°C aufgeheizt.

Die genauen Bedingungen der Behandlung zur Störoxidreduzierung müssen für jedes Material bzw. für jede Elektrode individuell angepasst werden. In Kenntnis der vorliegenden Erfindung können verschiedene Verfahrensweisen erprobt werden, wobei das Ergebnis beispielsweise mittels der Karl-Fischer-Methode oder mittels einer elektrochemischen Messung überprüft werden kann.

Grundsätzlich besteht auch die Möglichkeit, die Zelle dadurch von Störoxiden zu befreien, dass die entsprechenden Bauteile mit einer dünnen Sperrschicht überzogen werden, durch die verhindert wird, dass eine Reaktion eines auf dem entsprechenden Bauteil vorhandenen Oxids mit dem Schwefeldioxid des Elektrolyten unter Reduktion des Schwefeldioxids stattfinden kann. Beispielsweise besteht die Möglichkeit, eine Graphitelektrode (bzw. deren aktive Masse) mit einer dünnen Schicht aus einem inerten, aber für die Ionen des Leitsalzes durchlässigen keramischen Material, insbesondere Aluminiumoxid (Al₂O₃) zu beschichten. Auch in diesem Fall kann durch experimentelle Untersuchungen geprüft werden, ob das Oxid so vollständig abgesperrt ist, dass es nicht mehr mit Schwefeldioxid unter Reduktion des Schwefeldioxids reagieren kann und demzufolge kein Störoxid mehr ist.

### Vergleich von Zellen mit unterschiedlichen Störoxidgehalten

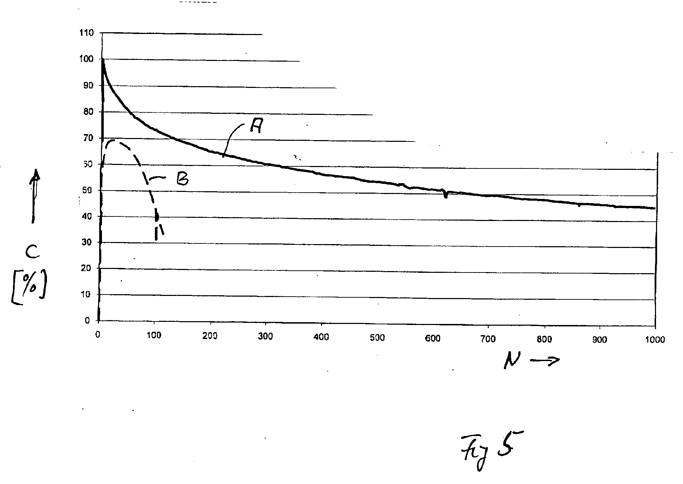

Figur 5 zeigt das Verhalten zweier Zellen mit unterschiedlichen Störoxidgehalten. Aufgetragen ist die jeweils beim Entladen gewonnene Kapazität C (in Prozent der Anfangskapazität) gegen die Zykelzahl N.

Die Kurve A zeigt das Zykelverhalten einer Zelle mit einem Störoxidgehalt von etwa 0,25 mMol Störoxid auf der positiven Elektrode, etwa 0,25 mMol Störoxid im Elektrolyten und etwa 1,1 mMol Störoxide auf der negativen Elektrode. Der Gesamtstöroxidgehalt betrug also 1,6 mMol (jeweils je Ah theoretische Kapazität der Zelle).

Die Kurve B beschreibt das Zykelverhalten einer Zelle mit einem Störoxidgehalt von etwa 12 mMol je Ah theoretische Kapazität der Zelle.

Die Zelle mit weniger Störoxiden (Kurve A) hat noch nach tausend Zyklen eine nutzbare Kapazität von 50 %, während die Kapazität der Zelle mit dem höheren Störoxidgehalt schon bei weniger als hundert Zyklen rasch auf sehr niedrige Werte abfällt.

Die Zelle mit dem geringen Störoxidgehalt hatte nach der Bildung der Deckschicht aus Lithiumdithionit eine Kapazität von 1125 mAh. Nach 1000 Zyklen betrug die Kapazität ca. 416 mAh, der Kapazitätsverlust somit 709 mAh. Dieser Wert stimmt im Rahmen der Messgenauigkeit gut mit dem Kapazitätsverlust überein, der sich auf der Grundlage der oben erläuterten Überlegungen errechnen lässt.

## Patentansprüche

1. Elektrochemische wiederaufladbare Batteriezelle mit einem Gehäuse, einer positiven Elektrode, einer negativen Elektrode und einem Elektrolyten, der Schwefeldioxid und ein Leitsalz des aktiven Metalls der Zelle enthält,
**dadurch gekennzeichnet, dass** die Gesamtmenge an in der Zelle enthaltenen Oxiden, die mit Schwefeldioxid unter Reduktion des Schwefeldioxids reagieren können, höchstens 10 mMol je Ah theoretische Kapazität der Zelle beträgt.

2. Batteriezelle nach Anspruch 1, **dadurch gekennzeichnet, dass** die Gesamtmenge an in der Zelle enthaltenden Oxiden, die mit Schwefeldioxid unter Reduktion des Schwefeldioxids reagieren können, höchstens 5 mMol, vorzugsweise höchstens 1 mMol, besonders bevorzugt höchstens 0,5 mMol und noch weiter bevorzugt 0,1 mMol je Ah theoretische Kapazität der Zelle beträgt.

3. Elektrochemische wiederaufladbare Batteriezelle, mit einem Gehäuse, einer positiven Elektrode, einer negativen Elektrode und einem Elektrolyten, der Schwefeldioxid und ein Leitsalz des aktiven Metalls der Zelle enthält,
**dadurch gekennzeichnet, dass** die Menge an in der negativen Elektrode enthaltenen Oxiden, die mit Schwefeldioxid unter Reduktion des Schwefeldioxids reagieren können, höchstens 6 mMol je Ah theoretische Kapazität der Zelle beträgt.

4. Elektrochemische wiederaufladbare Batteriezelle, mit einem Gehäuse, einer positiven Elektrode, einer negativen Elektrode und einem Elektrolyten, der Schwefeldioxid und ein Leitsalz des aktiven Metalls der Zelle enthält,
**dadurch gekennzeichnet, dass** die Menge an in der positiven Elektrode enthaltenen Oxiden, die mit Schwefeldioxid unter Reduktion des Schwefeldioxids reagieren können, höchstens 3 mMol je Ah theoretische Kapazität der Zelle beträgt.

5. Elektrochemische wiederaufladbare Batteriezelle, mit einem Gehäuse, einer positiven Elektrode, einer negativen Elektrode und einem Elektrolyten, der Schwefeldioxid und ein Leitsalz des aktiven Metalls der Zelle enthält,
**dadurch gekennzeichnet, dass** die Menge an in dem Elektrolyt enthaltenen Oxiden, die mit Schwefeldioxid unter Reduktion des Schwefeldioxids reagieren können, höchstens 10 mMol je Ah theoretische Kapazität der Zelle beträgt.

6. Batteriezelle nach einem der vorhergehenden Ansprüche, **dadurch gekennzeichnet, dass** als Reaktionsprodukt der Reaktion, durch die das Schwefeldioxid reduziert wird, eine Schwefel-Sauerstoff-Verbindung, in der der Schwefel eine Oxidationsstufe von maximal +III besitzt, insbesondere ein Thiosulfat des aktiven Metalls der Zelle, gebildet wird.

7. Batteriezelle nach einem der vorhergehenden Ansprüche, **dadurch gekennzeichnet, dass** als Reaktionsprodukt der Reaktion, durch die das Schwefeldioxid reduziert wird, insbesondere beim Überladen der Zelle, eine Schwefel-Sauerstoff-Verbindung, die zusätzlich ein Halogen enthält und bei der die Oxidationsstufe des Schwefels +VI ist, insbesondere ein Chlorsulfonat des aktiven Metalls der Zelle, gebildet wird.

8. Batteriezelle nach einem der vorhergehenden Ansprüche, **dadurch gekennzeichnet, dass** der Elektrolyt je Ah theoretische Kapazität der Zelle mindestens 1 mMol, bevorzugt mindestens 5 mMol und besonders bevorzugt mindestens 10 mMol Schwefeldioxid enthält.

9. Batteriezelle nach einem der vorhergehenden Ansprüche, **dadurch gekennzeichnet, dass** das aktive Metall ausgewählt ist aus der Gruppe bestehend aus den Alkalimetallen, den Erdalkalimetallen und den Metallen der zweiten Nebengruppe des Periodensystems.

10. Batteriezelle nach Anspruch 9, **dadurch gekennzeichnet, dass** das aktive Metall Lithium, Natrium, Calcium, Zink oder Aluminium ist.

11. Batteriezelle nach einem der vorhergehenden Ansprüche, **dadurch gekennzeichnet, dass** die negative Elektrode eine Insertionselektrode ist.

12. Batteriezelle nach Anspruch 11, **dadurch gekennzeichnet, dass** die negative Elektrode Kohlenstoff enthält.

13. Batteriezelle nach einem der vorhergehenden Ansprüche, **dadurch gekennzeichnet, dass** die positive Elektrode ein Metalloxid oder ein Metallhalogenid oder ein Metallphosphat enthält, wobei das Metall vorzugsweise ein Übergangsmetall der Ordnungszahlen 22 bis 28, insbesondere Kobalt, Nickel, Mangan oder Eisen ist.

14. Batteriezelle nach Anspruch 13, **dadurch gekennzeichnet, dass** die positive Elektrode eine Interkalationsverbindung enthält.

15. Batteriezelle nach einem der vorhergehenden Ansprüche, **dadurch gekennzeichnet, dass** der Elektrolyt als Leitsalz ein Halogenid, Oxalat, Borat, Phosphat, Arsenat oder Gallat des aktiven Metalls, vorzugsweise ein Tetrahalogenoaluminat eines Alkalimetalls, besonders bevorzugt ein Tetrachloroaluminat eines Alkalimetalls, enthält.

16. Batteriezelle nach einem der vorhergehenden Ansprüche, **dadurch gekennzeichnet, dass** die Konzentration an Leitsalz in dem Elektrolyt mindestens 0,01 mol/l, bevorzugt mindestens 0,1 mol/l, weiter bevorzugt mindestens 1 mol/l und ganz besonders bevorzugt mindestens 5 mol/l beträgt.

17. Batteriezelle nach einem der vorhergehenden Ansprüche, **dadurch gekennzeichnet, dass** die Menge des Elektrolyt je Ah theoretische Kapazität der Zelle höchstens 50 ml, bevorzugt höchstens 20 ml und besonders bevorzugt höchstens 10 ml beträgt.

18. Batteriezelle nach einem der vorhergehenden Ansprüche, **dadurch gekennzeichnet, dass** sie einen Separator enthält, der die negative und die positive Elektrode voneinander trennt und den Durchtritt von an der negativen Elektrode abgeschiedenem metallischem Lithium zur Oberfläche der positiven Elektrode verhindert.

19. Batteriezelle nach einem der Ansprüche 1 bis 17, **dadurch gekennzeichnet, dass** sie einen Isolator enthält, der die negative Elektrode elektrisch von der positiven Elektrode trennt, wobei er so ausgebildet ist, dass während des Ladens der Zelle an der negativen Elektrode abgeschiedenes aktives Metall derartig in Kontakt zu der positiven Elektrode kommen kann, dass an der Oberfläche der positiven Elektrode lokal begrenzte Kurzschlussreaktionen stattfinden.
